# EUROPÄISCHE PATENTANMELDUNG

(11) **EP 1 916 552 A1**
(43) Veröffentlichungstag der Anmeldung: **30.04.2008**
(21) Anmeldenummer: 07018997.2
(22) Anmeldetag: 27.09.2007
(51) Int. Cl.: G02B 6/38

(54) **Verbindungsgehäuse für optische Stecker**

(30) Priorität: 23.10.2006 DE 102006050308
(71) Anmelder: Telegärtner Gerätebau GmbH, 01774 Höckendorf (DE)
(72) Erfinder: Schröder, Wolfgang, Dipl.-Ing. (FH), 01738 Klingenberg (DE); Klein, Renate, 01737 Kurort Hartha (DE)
(74) Vertreter: Schmidt, Ursula

(57) **Zusammenfassung**

Die Erfindung betrifft ein Verbindungsgehäuse für optische Stecker, insbesondere für SC-Stecker zum Einsatz in Steckverbindersystemen mit Mehrfachkontaktierung.

Die erfindungsgemäße Aufgabe, die darin besteht, Verbindungsgehäuse für optische Stecker so auszubilden, dass sie bei möglichst geringem konstruktiven und Kostenaufwand steckkompatibel zu bekannten Stecksystemen ausgebildet sind und sich der Montage- und Demontageaufwand verringert, wird dadurch gelöst, dass das Verbindungsgehäuse (2) eine im Wesentlichen streifenartige Grundform aufweist, wobei der Gehäusestreifen (4) in miteinander verbundene Wandungsteile (5, 6, 7, 8) unterteilt ist, die derart zusammenklappbar ausgebildet sind, dass sie die aneinander gefügten optischen Stecker (1) kabelanschlussseitig im Bereich der Kabelanschlussseiten (3) formschlüssig umschließen und die beiden Enden (10, 11) des Gehäusestreifens (4) Befestigungselemente (13, 14) zur lösbaren Verriegelung des Verbindungsgehäuses (2) aufweisen.

## Beschreibung

Die Erfindung betrifft ein Verbindungsgehäuse für optische Stecker, insbesondere für SC-Stecker zum Einsatz in Steckverbindersystemen mit Mehrfachkontaktierung.

Lösungen, nach denen bekannte optische Stecker mit Einzelkontakten in Steckverbindersystemen eingesetzt werden, die eine Mehrfachkontaktierung erfordern, wie sie zum Beispiel in der Informationstechnik eingesetzt werden, sind bereits bekannt.

So offenbart die Druckschrift CH 692 827 A5 eine Kontaktsteckeranordnung für Lichtwellenleiter, bestehend aus wenigstens zwei normierten und handelsüblichen Steckern der Bauart SC, die mittels Kupplungsmitteln mit vorgegebenen Stecköffnungen eines elektrischen Steckverbindungssystems formschlüssig zusammenwirken. Die Kupplungsmittel sind als zwei im Wesentlichen gleiche Gehäuseteile ausgebildet, welche über Flanschmittel verbunden sind und die der Kontaktierung dienende Mittel umschließen.

Nachteilig an dieser Lösung ist die mehrteilige Ausführung der Gehäuseteile. Dadurch, dass die Gehäuseteile bei der Montage des Steckers ineinander verrasten, ist es kaum möglich, vor Ort den Stecker zerstörungsfrei zu demontieren, um gegebenenfalls die Polarität der einzelnen Stecker verändern zu können.

Es ist deshalb Aufgabe der Erfindung, Verbindungsgehäuse für optische Stecker der eingangs beschriebenen Art so auszubilden, dass sie bei möglichst geringem konstruktiven und Kostenaufwand steckkompatibel zu bekannten Stecksystemen ausgebildet sind und sich der Montage- und Demontageaufwand gegenüber bekannten Steckern deutlich verringert.

Die erfindungsgemäße Aufgabe wird dadurch gelöst, dass das Verbindungsgehäuse eine im Wesentlichen streifenartige Grundform aufweist, wobei der Gehäusestreifen in miteinander verbundene Wandungsteile unterteilt ist, die derart zusammenklappbar ausgebildet sind, dass sie die aneinander gefügten optischen Stecker kabelanschlussseitig formschlüssig umschließen und die beiden Enden des Gehäusestreifens Befestigungselemente zur lösbaren Verriegelung des Verbindungsgehäuses aufweisen.

Mit dieser Lösung wird erreicht, dass auf kostengünstige, konstruktiv einfache Art und Weise optische Stecker mit mehreren Steckkontakten hergestellt werden können, die vorzugsweise in normierten, handelsüblichen, optischen Steckverbindungssystemen einsetzbar sind. Das Verbindungsgehäuse besteht nur noch aus einem klammerartigen Element, das lösbar ausgebildet ist, wodurch vor Ort beispielsweise die zerstörungsfreie Demontage des Verbindungsgehäuses möglich ist, um die Polarität des Steckers entsprechend den vorhandenen Gegebenheiten anpassen zu können.

Bei einer bevorzugten Ausführungsform ist das Verbindungsgehäuse für den Einsatz in Duplex-Steckverbindersystemen ausgebildet.

Die Steckkompatibilität zu bekannten optischen Steckverbindungssystemen wird dadurch auf kostengünstige und konstruktiv einfache Art und Weise hergestellt, dass die Ausbildung, Anordnung und Dimensionierung des Verbindungsgehäuses an normierte Steckverbindungssysteme angepasst ist.

Insbesondere bei Einsatz von bekannten SC-Steckern ist erfindungsgemäß vorgesehen, dass das Verbindungsgehäuse im montierten Zustand eine rechteckige Form aufweist.

Aus werkzeugtechnischer und konstruktiver Sicht ist es vorteilhaft, wenn die seitlichen Wandungsteile rechtwinklig vom oberen oder unteren Wandungsteil in die Vertikale klappbar und scharnierartig miteinander verbunden sind.

Durch diese einteilige, einfache Ausführung kann unterbunden werden, dass Verbindungsteile vor Ort verloren gehen. Die Montage und Handhabung der Stecker wird wesentlich vereinfacht.

Bei Herstellung der Verbindungsgehäuse im Spritzgießverfahren können die Wandungsteile mittels Filmscharniere miteinander verbunden werden.

Nach einer weiteren vorzugsweisen und vorteilhaften Ausführung des Verbindungsgehäuses ist das obere oder untere Wandungsteil geteilt ausgebildet, die beiden Teile bilden die Enden des Gehäusestreifens, sind vom Gehäusestreifen rechtwinklig abgebogen und weisen die Befestigungselemente auf.

Dabei sind die Befestigungselemente als Zapfen-Bohrung-Verbindung ausgebildet, die an den Stirnseiten der Enden des Gehäusestreifens angeordnet sind.

Erfindungsgemäß ist auch vorgesehen, dass die Wandungsteile umlaufende nutförmige Aussparungen zum Einrasten und Fixieren der Lage der Stecker aufweisen.

Zur Verhinderung des Verwechselns der Steckrichtung bei der Verbindung der Stecker ist ein vorsprungartiges Führungselement angeordnet, das in entsprechend ausgebildete Gegenelemente der Kupplung eingreift.

Die Erfindung soll nachfolgend anhand eines Ausführungsbeispieles näher erläutert werden. Die zugehörige Zeichnung zeigt dabei in
- Fig. 1: eine perspektivische Darstellung zwei optischer SC-Stecker, die durch das Verbindungsgehäuse zu einem SC-RJ-Duplex-Stecker zusammengefügt sind,
- Fig. 2: einen erfindungsgemäßen Gehäusestreifen in seiner Grundform,
- Fig. 3: den Gehäusestreifen nach Fig. 2 in teilweise zusammengeklappter Form und
- Fig. 4: das Verbindungsgehäuse im montierten Zustand, jedoch ohne SC-Stecker.

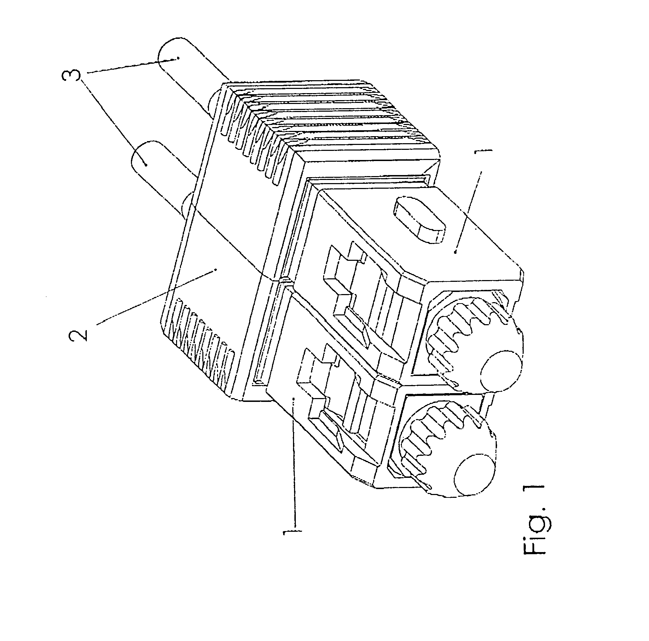

In Fig. 1 ist ein SC-RJ-Duplex-Stecker dargestellt, der im Wesentlichen aus zwei bekannten, genormten SC-Steckern 1 besteht, die miteinander so durch das Verbindungsgehäuse 2 miteinander verbunden sind, dass sie steckkompatibel in bekannten SC-RJ-Duplex-Steckverbindersystemen, vorzugsweise zur Informationsübertragung eingesetzt werden können. Da der Aufbau der SC-Stecker bekannt ist und beispielsweise auch in der Druckschrift CH 692 827 A5 ausführlich beschrieben ist, wird hierzu nicht weiter ausgeführt. Angeschlossene Lichtwellenleiterkabel sind in Fig. 1 nicht dargestellt, lediglich die Kabelanschlussenden 3 der SC-Stecker 1 sind gezeigt.

Das Verbindungsgehäuse 2 ist im Bereich der Kabelanschlussenden 3 angeordnet und umklammert diese so, dass die durch die Normierung vorgegebenen Bedingungen, insbesondere bezüglich der Dimensionierung, eingehalten werden und die Kontaktherstellung mit der in der Regel ebenfalls normierten optischen Kupplung (in der Zeichnung nicht gezeigt) ohne weitere zusätzliche Verbindungsteile und ohne Behinderung durch das Verbindungsgehäuse 2 erfolgen kann.

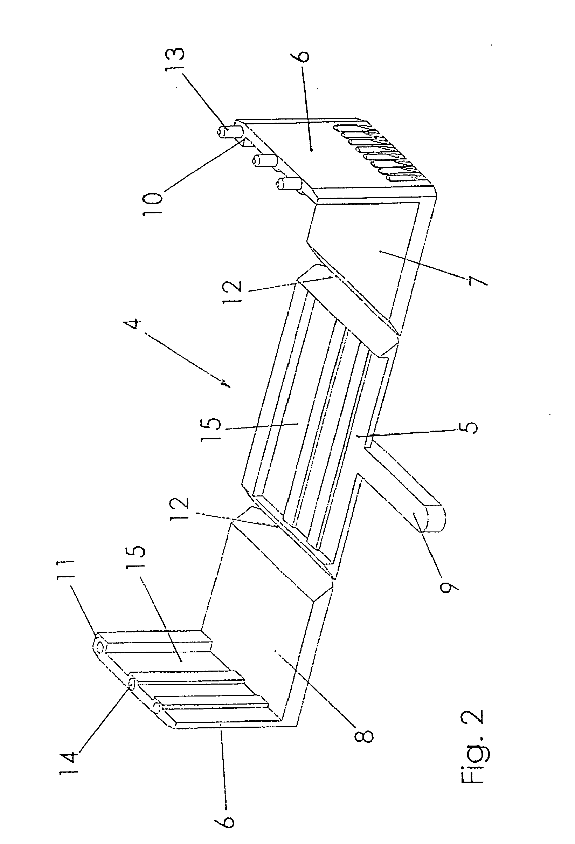

Fig. 2 zeigt die streifenartige Grundform des erfindungsgemäßen Verbindungsgehäuses 2, hergestellt aus einem Kunststoffmaterial im Spritzgießverfahren. Das im montierten Zustand rechteckförmige Verbindungsgehäuse 2 besteht als Gehäusestreifen 4 aus dem unteren Wandungsteil 5, dem oberen Wandungsteil 6, der geteilt ausgebildet ist, und den seitlichen Wandungsteilen 7 und 8. Am unteren Wandungsteil 5 ist ein vorsprungartig ausgebildetes Führungselement 9 angespritzt, das als Orientierungsnase dient, um zu verhindern, dass die Stecker in falscher Orientierung in Kupplungs- oder Anschlusselemente eingesteckt werden. Das Führungselement 9 greift dabei in entsprechend angeordnete nutförmige Öffnungen des Kupplungs- oder Anschlusselementes ein. Das geteilt ausgebildete obere Wandungsteil 6 bildet je ein Ende 10, 11 des Gehäusestreifens 4, ist von der Grundform des Gehäusestreifens 4 rechtwinklig abgebogen und fest mit den seitlichen Wandungsteilen 7 und 8 verbunden.

Zur Herstellung der rechteckigen Form des Gehäusestreifens 4 und zum Verbinden der SC-Stecker 1 zu einem Duplex-Stecker sind die seitlichen Wandungsteile 7, 8 scharnierartig, durch im Spritzgießverfahren ausgebildete Filmscharniere 12, mit dem unteren Wandungsteil 5 elastisch verbunden.

Das geteilt ausgeführte obere Wandungsteil 6 weist an seinen Stirnseiten an einem Ende 10 Befestigungselemente 13 in Form von Zapfen auf, die zum klammerartigen Verbinden der SC-Stecker 1 in angepasst ausgebildete Befestigungselemente 14 in Form von Bohrungen des anderen Endes 11 des Wandungsteils 6 eingreifen. Die Dimensionierung der Befestigungselemente 13, 14 ist so gewählt, dass die Verbindung durch Presspassung hergestellt wird, die jedoch lösbar und wieder verbindbar ist. Das Lösen der Verbindung erfolgt mit Hilfe eines einfachen Werkzeuges.

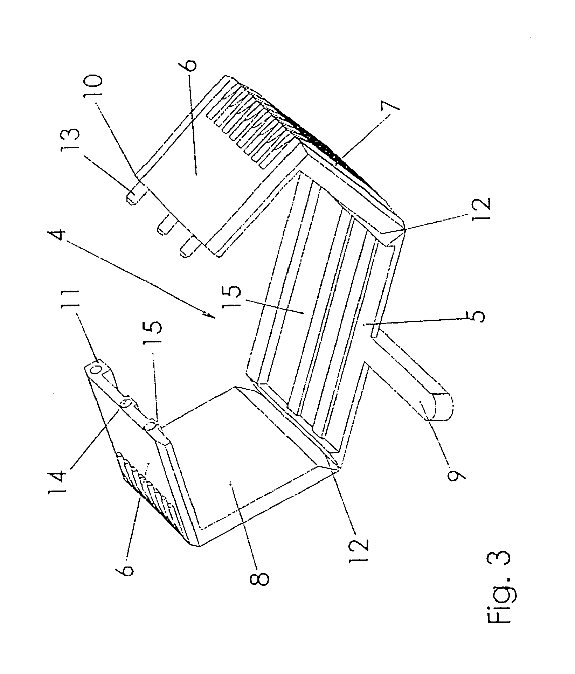

In Fig. 3 ist der Formprozess des Gehäusestreifens 4 zum Verbindungsgehäuse 2 veranschaulicht, wobei durch die Wandungsteile 6, 7, 8 die rechteckige Form des Verbindungsgehäuses 2 hergestellt wird.

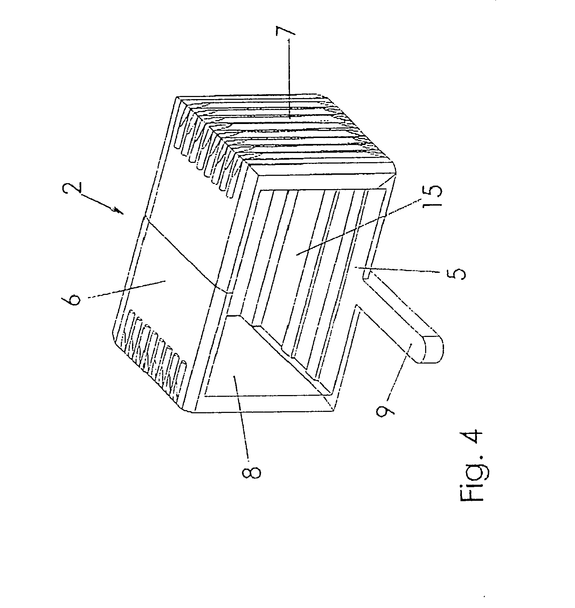

Fig. 4 zeigt das Verbindungsgehäuse 2 im Endzustand.

Dargestellt ist auch, dass das Innere des Verbindungsgehäuses umlaufende, nutförmige Aussparungen 15 in Form von wenigstens im oberen und unteren Wandungsteil 5, 6 ausgebildeten Rillen aufweist, die der Lagefixierung der SC-Stecker 1 dienen. Die SC-Stecker 1 rasten infolge der äußeren Form ihrer Gehäuse in die Rillen ein und stellen eine formschlüssige Verbindung her.

Bei anderen Ausführungsformen kann es selbstverständlich kostengünstiger und konstruktiv einfacher sein, wenn sowohl anders ausgebildete scharnierartige Elemente als auch andere Befestigungselemente eingesetzt werden.

Ist der Einsatz der mit nur einem Kontakt versehenen Stecker in Steckverbindersystemen für mehrere Übertragungskanäle vorgesehen, kann das Verbindungsgehäuse 2 derart ausgebildet sein, dass es mehrere übereinander oder nebeneinander angeordnete SC- oder andere Einzelstecker umklammert und verbindet.

### Bezugszeichenliste

- 1: optischer Stecker, SC-Stecker
- 2: Verbindungsgehäuse
- 3: Kabelanschlussende
- 4: Gehäusestreifen
- 5: unterer Wandungsteil
- 6: oberer Wandungsteil
- 7: seitlicher Wandungsteil
- 8: seitlicher Wandungsteil
- 9: vorsprungartiges Führungselement
- 10: Ende des Gehäusestreifens
- 11: Ende des Gehäusestreifens
- 12: Filmscharnier
- 13: Befestigungselement, Zapfen
- 14: Befestigungselement, Bohrung
- 15: nutförmige Aussparungen, Rillen

## Patentansprüche

1. Verbindungsgehäuse für optische Stecker, insbesondere für SC-Stecker zum Einsatz in Steckverbindersystemen mit Mehrfachkontaktierung, **dadurch gekennzeichnet, dass** das Verbindungsgehäuse (2) eine im Wesentlichen streifenartige Grundform aufweist, wobei der Gehäusestreifen (4) in miteinander verbundene Wandungsteile (5, 6, 7, 8) unterteilt ist, die derart zusammenklappbar ausgebildet sind, dass sie die aneinander gefügten optischen Stecker (1) kabelanschlussseitig formschlüssig umschließen und die beiden Enden (10, 11) des Gehäusestreifens (4) Befestigungselemente (13, 14) zur lösbaren Verriegelung des Verbindungsgehäuses (2) aufweisen.

2. Verbindungsgehäuse nach Anspruch 1, **dadurch gekennzeichnet, dass** es für den Einsatz in Duplex-Steckverbindersystemen ausgebildet ist.

3. Verbindungsgehäuse nach Anspruch 1 bis 3, **dadurch gekennzeichnet, dass** es an normierte Stecker (1) angepasst ist.

4. Verbindungsgehäuse nach Anspruch 1 und wenigstens einem der Ansprüche 2 oder 3, **dadurch gekennzeichnet, dass** es im montierten Zustand eine rechteckige Form aufweist.

5. Verbindungsgehäuse nach Anspruch 1 und wenigstens einem der Ansprüche 2 bis 4, **dadurch gekennzeichnet, dass** die seitlichen Wandungsteile (7, 8) dadurch rechtwinklig vom oberen oder unteren Wandungsteil (5, 6) in die Vertikale klappbar sind, dass sie scharnierartig miteinander verbunden sind.

6. Verbindungsgehäuse nach Anspruch 5, **dadurch gekennzeichnet, dass** die Wandungsteile (5, 7, 8) mittels Filmscharniere miteinander verbunden sind.

7. Verbindungsgehäuse nach Anspruch 1 und wenigstens einem der Ansprüche 2 bis 6, **dadurch gekennzeichnet, dass** das obere oder untere Wandungsteil (5, 6) geteilt ausgebildet ist, die beiden Teile die Enden (10, 11) des Gehäusestreifens (4) bilden, vom Gehäusestreifen (4) rechtwinklig abgebogen sind und die Befestigungselemente (13, 14) aufweisen.

8. Verbindungsgehäuse nach Anspruch 7, **dadurch gekennzeichnet, dass** die Befestigungselemente (13, 14) als Zapfen-Bohrung-Verbindung ausgebildet sind, die an den Stirnseiten der Enden (10, 11) des Gehäusestreifens (4) angeordnet sind.

9. Verbindungsgehäuse nach Anspruch 1 und wenigstens einem der Ansprüche 2 bis 8, **dadurch gekennzeichnet, dass** die Wandungsteile (5, 6) umlaufende nutförmige Aussparungen (15) zum Einrasten und Fixieren der Lage der Stecker (1) aufweisen.

10. Verbindungsgehäuse nach Anspruch 1 und wenigstens einem der Ansprüche 2 bis 9, **dadurch gekennzeichnet, dass** ein vorsprungartiges Führungselement (9) angeordnet ist, das in entsprechend ausgebildete Gegenelemente von Kupplungs-oder Anschlusselementen eingreift.
